# EUROPÄISCHE PATENTSCHRIFT

(11) **EP 0 410 107 B1**
(45) Veröffentlichungstag und Bekanntmachung des Hinweises auf die Patenterteilung: **23.06.1993**
(21) Anmeldenummer: 90109940.8
(22) Anmeldetag: 25.05.1990
(51) Int. Cl.: C01B 33/00

(54) **Verfahren zur Herstellung von Siliciumdiimid mit geringem Kohlenstoffgehalt**
Process for the preparation of silicon dimide with a low carbon content
Procédé de préparation de diimide de silicium de faible teneur en carbon

(30) Priorität: 22.07.1989 DE 3924361
(43) Veröffentlichungstag der Anmeldung: 30.01.1991
(73) Patentinhaber: HÜLS AKTIENGESELLSCHAFT, 45764 Marl (DE)
(72) Erfinder: Ruff, Klaus, D-5210 Troisdorf (DE); Breuer, Joachim, D-5216 Niederkassel 2 (DE); Flick, Wilhelm, Dr., D-5000 Köln 90 (DE)

(56) Entgegenhaltungen:
- DE-A- 3 241 440
- GB-A- 2 204 862
- GB-A- 2 207 667
- CHEMICAL ABSTRACTS Band 114, Nr. 4, 28. Januar 1991, Zusammenfassung Nr. 26730k, Columbus, Ohio, US; P. ZHANG et al.: "Method and apparatus for producing silicon nitride powder" & CN 1040559, 21.03.1990
- CHEMICAL ABSTRACTS Band 92, Nr. 14, 7. April 1980, Zusammenfassung Nr. 113132n, Columbus, Ohio, US; & JP - A - 79134098 (ASAHI GLASS CO.) 18.10.1979
- SILIKAT TECHNIK Band 38, Nr. 5, 1987, Seiten 161-164, Berlin, DDR; G. BODEN et al.: "Probleme der Herstellung von Siliziumnitridpulver"
- PATENT ABSTRACTS OF JAPAN Band 10, Nr. 49 (C-33O)(2106), 26. Februar 1986; & JP -A - 60195099 (KOBE SEIKOSHO K.K.) 03.10.1985

## Beschreibung

Gegenstand der Erfindung ist ein Verfahren zur Herstellung von Siliciumdiimid mit geringem Kohlenstoffgehalt durch Umsetzung von Chlorsilanen mit Ammoniak.

Aus Siliciumdiimid wird durch thermische Zersetzung Siliciumnitrid gemäß der Gleichung

3 Si(NH)₂ → Si₃N₄ + 2 NH₃ (1)

gebildet.

Siliciumnitrid zählt zu den Hochleistungskeramiken, die sich durch mechanische Festigkeit, Härte, Abriebfestigkeit, chemische Beständigkeit auch bei hohen Temperaturen und niedrige spezifische Dichte auszeichnen.

Formkörper aus Hochleistungskeramiken werden durch Sintern von Keramikpulvern hergestellt. Um optimale Eigenschaften eines Keramikkörpers aus Siliciumnitrid zu erhalten, ist es notwendig, die Verunreinigungen bereits im Pulver gering zu halten. Zu den Hauptverunreinigungen zählen Sauerstoff und Kohlenstoff. Kohlenstoff erhöht die Oxidationsempfindlichkeit einer gesinterten Probe und erschwert die Verdichtung. Im Falle der Herstellung von Siliciumnitrid durch thermische Zersetzung von Siliciumdiimid muß bereits das Siliciumdiimid wenig Kohlenstoff enthalten, damit das Siliciumnitridpulver weitgehend frei von Kohlenstoff ist. Bei der thermischen Zersetzung selbst reduziert sich der Kohlenstoffgehalt vom Diimid zum Nitrid um den Faktor 5 bis 9 je nach den Thermolysebedingungen.

Der Kohlenstoffgehalt im Siliciumdiimid rührt von organischen Lösungsmitteln her, die bei der Umsetzung von Chlorsilanen mit Ammoniak zugegen sein können. Im folgenden beschränken sich die Ausführungen auf Siliciumtetrachlorid als dem mengenmäßig verbreitetsten Vertreter der Chlorsilane. Mit Ammoniak setzt sich Siliciumtetrachlorid gemäß der Gleichung

SiCl₄ + 6 NH₃ → Si(NH)₂ + 4 NH₄Cl (2)

um.

Die Herstellung von Siliciumdiimid ohne Verwendung von Lösungsmitteln läßt sich durch eine Reaktion von
1. gasförmigem Siliciumtetrachlorid mit festem Ammoniak bei tiefen Temperaturen,
2. festem Siliciumtetrachlorid mit gasförmigem Ammoniak bei tiefen Temperaturen oder
3. gasförmigem Siliciumtetrachlorid mit gasförmigem Ammoniak

durchführen.

Diese Verfahren sind technisch aufwendig und/oder ergeben eine geringe Raum/Zeit-Ausbeute.

Sind bei der Reaktion von Ammoniak mit Siliciumtetrachlorid zur Bildung von Siliciumdiimid einer oder beide Reaktionspartner flüssig, so verwendet man ein Verdünnungsmittel. Dadurch wird vermieden, daß sich an der Stelle, an der die Reaktionspartner zusammenkommen, infolge der sehr großen Reaktionsgeschwindigkeit die Feststoffe Siliciumdiimid und Ammoniumchlorid in solcher Menge bilden, daß die Zusammenführung der Reaktionspartner unterbrochen wird. Im allgemeinen wird das Verdünnungsmittel dem Siliciumtetrachlorid zugemischt. Gebräuchlich sind aliphatische, aromatische oder alicyclische Kohlenwasserstoffe, die inaktive gegenüber Ammoniak und Siliciumtetrachlorid sind und die sich nur wenig mit Ammoniak mischen. So verdünnen Masdiyasni und Cooke (J. Am. Cer. Soc. 56 (1973), 628) Siliciumtetrachlorid mit n-Hexan und leiten gasförmiges Ammoniak bei 0 °C in die flüssige Phase ein.

Gemäß einem Beispiel der DE-PS 32 41 440 wird mit Stickstoff verdünntes, gasförmiges Ammoniak bei - 10 °C in die Lösung einer Mischung von Chlorsilanen in Toluol eingeführt. Nach Waschen mit flüssigem Ammoniak und einer Thermolyse bei Temperaturen bis zu 1 450 °C enthält des Siliciumnitrid 1,2 Gew.-% Kohlenstoff. In derselben Literaturstelle wird die Herstellung von Siliciumdiimid bei - 40 °C beschrieben, indem ein in Toluol gelöstes Chlorsilangemisch in Toluol eingeleitet wird, das mit flüssigem Ammoniak überschichtet ist, so daß die Reaktion an der Grenzfläche Toluol/Ammoniak stattfindet. Auch hier wird das Reaktionsproduct mit flüssigem Ammoniak gewaschen und anschließend bei 1 460 °C calciniert, wonach ein Kohlenstoffgehalt im Siliciumnitrid zu 1,2 Gew.-% gemessen wird.

In der DE-PS 29 15 023 wird ein Verfahren zur Herstellung von Metallnitridpulver beschrieben. Dieses Verfahren arbeitet mit einer oberen Schicht aus flüssigem Ammoniak und einer unteren Schicht aus einem bei Reaktionstemperatur mit Ammoniak nicht oder nur geringfügig mischbaren organischen Lösungsmittel. Durch Einleiten Von Metallhalogenid - z. B. SiCl₄ - in die Lösungsmittelschicht erhält man infolge Reaktion an der Grenzfläche der beiden Schichten das Metallamid oder Metallimid.

In den genannten Literaturstellen wird nicht über den Kohlenstoffgehalt des gebildeten Siliciumdiimids berichtet, doch zeigt die Erfahrung, daß, wie bereits vorab erwähnt, der Kohlenstoffgehalt des Diimids um den Faktor 5 bis 9 höher als im Nitrid zu sein pflegt. Somit ist anzunehmen, daß der Kohlenstoffgehalt des Diimids in den zitierten Beispielen der DE-PS 32 41 440 etwa 5 Gew.-% oder mehr beträgt.

Aus dem Gesagten ergab sich die Aufgabe, ein Verfahren zur Herstellung von Siliciumdiimid mit geringem Kohlenstoffgehalten zu finden. Diese Aufgabe wurde erfindungsgemäß dadurch gelöst, daß man
a) flüssiges Chlorsilan in einer Mischung mit Kohlenwasserstoffen in einen flüssiges Ammoniak enthaltenden Reaktionsbehälter mit einer Massenstromdichte, bezogen auf den Einleitungsquerschnitt, von mehr als 100 kg/m²s einleitet,
b) die Reaktion zu Siliciumdiimid bei einer Temperatur von mindestens 5 °C durchführt und
c) nach Waschen mit flüssigem Ammoniak das Siliciumdiimid im Vakuum bei einer Temperatur von mindestens 100 °C trocknet.

Die Reaktion von Ammoniak mit durch Kohlenwasserstoffe verdünnten Chlorsilanen der allgemeinen Formel SiHₙCl₄₋ₙ, in welcher n 0, 1, 2 oder 3 bedeutet, unter Druck ist gemäß den vorstehend zitierten Literaturstellen bekannt.

Die Einleitung von Siliciumtetrachlorid in einer Mischung mit Kohlenwasserstoffen in den flüssiges Ammoniak enthaltenden Reaktionsbehälter kann durch Rohre erfolgen. Dabei kann die Mischung von Siliciumtetrachlorid mit dem Kohlenwasserstoff bereits vorher erfolgt sein. Es können aber auch konzentrische Rohre für die Einleitung benutzt werden, wobei Siliciumtetrachlorid im Innenrohr und der Kohlenwasserstoff im konzentrischen Außenrohr fließt und die Vermischung am Austritt aus den Rohren erfolgt. Der Reaktionsbehälter, in den das Siliciumtetrachlorid eingeleitet wird, enthält flüssiges Ammoniak; er ist entweder ausschließlich mit Ammoniak gefüllt, oder es können außerdem weitere für die Reaktion inerte Stoffe zugegen sein. Die Einleitung kann in die flüssige oder die gasförmige Phase erfolgen.

Infolge der höheren Konzentration an Kohlenwasserstoffen in unmittelbarer Nähe der Einleitungsöffnungen enthält das sich dort bildende Siliciumdiimid immer einen höheren Kohlenstoffgehalt. Um zu vermeiden, daß sich dort größere Mengen an Siliciumdiimid bilden, muß die Einleitung mit einer auf den Einleitungsquerschnitt bezogenen Massenstromdichte von mehr als 100 kg/m²s, vorzugsweise 1 000 bis 8 000 kg/m²s, erfolgen. Je größer die Konzentration von Siliciumtetrachlorid in der eingeleiteten Mischung ist, desto höher muß die Massenstromdichte gewählt werden.

Die Reaktionstemperatur der Reaktion von Siliciumtetrachlorid mit Ammoniak sollte 5 °C oder mehr betragen. Niedrigere Reaktionstemperaturen erhöhen den Kohlenstoffgehalt im Siliciumdiimid. Die Temperierung der Reaktionsmischung während der Reaktion kann über Mantelkühlung oder Verdampfungskühlung, vorzugsweise eines Ammoniaküberschusses im Reaktionsbehälter, erfolgen. Neben dem Effekt eines niedrigen Kohlenstoffgehaltes im Siliciumdiimid ist eine solche Verfahrensweise besonders bei Temperaturen oberhalb 14 °C wirtschaftlich, da dann normales Kühlwasser zu Abführung der Reaktionswärme benutzt werden kann.

Nach Waschen mit flüssigem Ammoniak wird das Siliciumdiimid im Vakuum getrocknet, wobei die Trocknungstemperatur 100 °C oder höher sein roll. Niedrigere Trocknungstemperaturen ergeben einen erhöhten Gehalt an Kohlenstoff. Die Trocknung kann im selben Behälter wie der Waschvorgang erfolgen, es können aber auch alle bekannten Vakuumtrockner eingesetzt werden.

Das nach dem erfindungsgemäßen Verfahren hergestellte Siliciumdiimid enthält überraschenderweise wesentlich weniger Kohlenstoff als die nach bekannten Verfahren hergestellten Produkte.

Die Erfindung wird nachfolgend anhand der Beispiele näher erläutert.

### Beispiel 1

In einen Druckbehälter von 5 l Inhalt werden nach Evakuierung 3 l flüssiges Ammoniak eingefüllt. Der Behälter ist mit einem Rührer und einer Filterkerze ausgerüstet; zur Abführung der Reaktionswärme durch Verdampfungskühlung dient ein externer Kondensator. Der Behälter hat einen Doppelmantel. In diesen Behälter wird über ein Einleitungsrohr eine Mischung von 150 ml Siliciumtetrachlorid und 600 ml Toluol mit einer Massenstromdichte von 4 000 kg/m²s eingeleitet. Die Reaktion findet spontan statt; die Reaktionstemperatur wird auf 15 °C gehalten. Nach Abfiltrieren der Flüssigkeit wird der Feststoff dreimal mit 3 l flüssigem Ammoniak gewaschen. Anschließend findet eine Trocknung unter Vakuum bei 130 °C statt. Im Siliciumdiimid wird anschließend ein Kohlenstoffgehalt von 1,1 Gew.-% gemessen. Wird die Trocknung bei 105 °C durchgeführt, ergibt sich ein Kohlenstoffgehalt von 2,2 Gew.-%.

### Vergleichsbeispiel 1

Die Herstellung des Siliciumdiimids erfolgt nach Beispiel 1 mit der Änderung, daß die abschließende Trocknung bei einer Temperatur von 60 °C durchgeführt wird. Der Kohlenstoffgehalt im Siliciumdiimid beträgt dann 5,4 Gew.-%. Bei einer Trocknungstemperatur von 30 °C findet man 6,6 Gew.-% Kohlenstoff.

### Beispiel 2

Die Herstellung des Siliciumdiimids erfolgt nach Beispiel 1 mit der Änderung, daß die Massenstromdichte 2 000 kg/m²s beträgt und die Reaktion bei 10 °C abläuft. Nach Trocknung bei 130 °C enthält das Siliciumdiimid 1,8 Gew.-% Kohlenstoff.

### Vergleichsbeispiel 2

Die Herstellung des Siliciumdiimids erfolgt nach Beispiel 2, aber bei einer Reaktionstemperatur von 0 °C. Anschließend wird bei 130 °C getrocknet. Gemessen wird ein Kohlenstoffgehalt von 4,8 Gew.-%.

### Beispiel 3

Die Herstellung des Diimids erfolgt nach Beispiel 1. Die Reaktionstemperatur beträgt 20 °C, die Trocknung wird bei 130 °C bzw. 160 °C durchgeführt. Im Siliciumdiimid mißt man einen Kohlenstoffgehalt von 0,9 Gew.-% bzw. 0,5 Gew.-%. Bei einer Reaktionstemperatur von 32 °C und einer anschließenden Trocknung bei 160 °C wurden 0,5 Gew.-% Kohlenstoff gefunden.

### Beispiel 4

In den Behälter von Beispiel 1 werden nach Evakuierung 3 l flüssiges Ammoniak eingefüllt. Eine Mischung aus 170 ml Trichlorsilan und 500 ml Toluol wird über ein Einleitrohr mit einer Massenstromdichte von 1 000 kg/m²s eingeleitet. Die Temperatur bei der Reaktion beträgt 15 °C. Nach Trocknung des Siliciumdiimids in Vakuum bei 160 °C findet man einen Kohlenstoffgehalt von 0,8 Gew.-%.

## Patentansprüche

1. Verfahren zur Herstellung von Siliciumdiimid mit geringem Kohlenstoffgehalt durch Reaktion von Ammoniak mit durch Kohlenwasserstoffe verdünnten Chlorsilanen der allgemeinen Formel
SiHₙCl_{4-n'}
in welcher n 0, 1, 2 oder 3 bedeutet, unter Druck, dadurch gekennzeichnet, daß man
a) flüssiges Chlorsilan in einer Mischung mit Kohlenwasserstoffen in einen flüssiges Ammoniak enthaltenden Reaktionsbehälter mit einer Massenstromdichte, bezogen auf den Einleitungsquerschnitt, von mehr als 100 kg/m²s einleitet,
b) die Reaktion zu Siliciumdiimid bei einer Temperatur von mindestens 5 °C durchführt und
c) nach Waschen mit flüssigem Ammoniak das Siliciumdiimid im Vakuum bei einer Temperatur von mindestens 100 °C trocknet.

2. Verfahren nach Anspruch 1, dadurch gekennzeichnet, daß die Massenstromdichte 1 000 bis 8 000 kg/m²s beträgt.

3. Verfahren nach Anspruch 1 oder 2, dadurch gekennzeichnet, daß man die Reaktion bei einer Temperatur oberhalb 14 °C durchführt.

## Claims

1. Process for the production of silicon diimide with reduced carbon content by reaction of ammonia with hydrocarbon-diluted chlorosilanes of the general formula
SiHₙCl_{4-n'}
in which n denotes 0, 1, 2 or 3, under pressure, characterised in that
a) liquid chlorosilane in a mixture with hydrocarbons is led into a liquid ammonia-containing reaction container with a mass flow density, related to the inlet cross-section, of more than 100kg/m²s,
b) the reaction to form silicon diimide is carried out at a temperature of at least 5°C and
c) the silicon diiimde is dried in a vacuum at a temperature of at least 100°C after washing with liquid ammonia.

2. Process according to Claim 1, characterised in that the mass flow density amounts to 1,000 to 8,000 kg/m²s.

3. Process according to Claim 1 or 2, characterised in that the reaction is carried out at a temperature above 14°C.

## Revendications

1. Procédé de préparation de diimidure de silicium avec une faible teneur en carbone par réaction, sous pression, d'ammoniac avec des cholorosilanes dilués par des hydrocarbures répondant à la formule générale
SiHₙCl_{4-n'}
dans laquelle n signifie 0,1, 2 ou 3, caractérisé en ce que
a) on introduit du chlorosilane liquide en mélange avec des hydrocarbures dans une cuve à réaction contenant de l'ammoniac liquide avec un débit massique, rapporté à la section d'admission, de plus de 100 kg/m²s,
b) on effectue la réaction en diimidure de silicium à une température d'au moins 5°C et
c) on sèche le diimidure de silicium sous vide à une température d'au moins 100°C après lavage avec de l'ammoniac liquide.

2. Procédé selon la revendication 1, caractérisé en ce que le débit massique s'étend de 1.000 à 8.000 kg/m²s.

3. Procédé selon la revendication 1 ou 2, caractérisé en ce qu'on effectue la réaction à une température supérieure à 14°C.
